# EUROPÄISCHE PATENTSCHRIFT

(11) **EP 2 873 811 B1**
(45) Veröffentlichungstag und Bekanntmachung des Hinweises auf die Patenterteilung: **17.01.2018**
(21) Anmeldenummer: 14193321.8
(22) Anmeldetag: 14.11.2014
(51) Int. Cl.: F01D 11/12, F01D 11/02

(54) **Einlaufbelag auf Basis von Metallfasern**
Abradable material based on metal fibres
Garniture de rodage à base de fibres métalliques

(30) Priorität: 19.11.2013 DE 102013223585
(43) Veröffentlichungstag der Anmeldung: 20.05.2015
(73) Patentinhaber: MTU Aero Engines AG, 80995 München (DE)
(72) Erfinder: Werner, André, Dr., 80639 München (DE); Andersen, Olaf, Dr., 01097 Dresden (DE); Hauser, Ralf, Dr., 01328 Dresden (DE); Kostmann, Cris, 01796 Pirna (DE)

(56) Entgegenhaltungen:
- EP-A2- 0 192 162
- EP-A2- 1 270 876
- DE-A1- 2 950 150
- GB-A- 2 049 484
- GB-A- 2 496 887
- US-A- 3 310 387
- US-A- 4 075 364

## Beschreibung

### HINTERGRUND DER ERFINDUNG

### GEBIET DER ERFINDUNG

Die vorliegende Erfindung betrifft einen Einlaufbelag für eine Strömungsmaschine, insbesondere ein Flugzeugtriebwerk, zur Anbringung an einer Dichtung zwischen einem Rotor und einem Stator, wobei der Einlaufbelag ein metallisches Gerüst umfasst, welches Zwischenräume aufweist, die mit einem anorganisch - nichtmetallischen Füllstoff gefüllt sind.

### STAND DER TECHNIK

Bei Strömungsmaschinen, wie stationären Gasturbinen oder Flugzeugtriebwerken, dreht sich ein Rotor in Form einer sich drehenden Welle mit einer Vielzahl von Laufschaufeln gegenüber einem Stator, der durch das umgebende Gehäuse und daran angeordnete Leitschaufeln gebildet ist. Um einen hohen Wirkungsgrad zu erzielen, soll möglichst das gesamte, die Maschine durchströmende Arbeitsgas den vorgesehenen Strömungspfad zwischen den Leitschaufeln und den Laufschaufeln durchströmen. Entsprechend soll vermieden werden, dass an den freien Enden der Leit- bzw. Laufschaufeln und den gegenüberliegenden, sich relativ dazu bewegenden Maschinenteilen Arbeitsgas vorbeiströmen kann. Entsprechend ist es bekannt, zwischen den jeweiligen Komponenten Dichtungen vorzusehen, und zwar in Form der sogenannten Outer - Air - Seal (äußere Luftdichtung) oder Inner - Air - Seal (innere Luftdichtung), so dass unter allen Betriebsbedingungen möglichst keine Strömungsverluste an Arbeitsgas im Bereich der freien Enden von Leit- bzw. Laufschaufeln auftreten. Hierzu werden im Stand der Technik Panzerungen bzw. sogenannte Dichtfinnen zusammen mit Einlaufbelägen vorgesehen, in welche sich die Panzerungen bzw. Dichtfinnen einschleifen können, damit auch bei Veränderung der Zwischenräume zwischen den freien Enden von Leit- und Laufschaufeln und den gegenüberliegenden Maschinenkomponenten während unterschiedlicher Betriebsbedingungen die Strömungsverluste möglichst gering gehalten werden.

Für die Anstreif- bzw. Einlaufbeläge können Metallschäume verwendet werden, wie sie in der EP 1 013 890 B1 beschrieben sind.

Darüber hinaus sind Verbundmaterialien für entsprechende Dichtungen bekannt, bei denen eine Metallmatrix beispielsweise mit Bornitrid als Verschleißschutzpartikel kombiniert ist, wie sie beispielsweise in der EP 2 327 879 A2 und der EP 2 196 632 A2 beschrieben sind. Außerdem offenbart GB2049484 einen Einlaufbelag einer Luftdichtung, wobei ein poröses metallisches Drahtgeflechtpolter mit mit Keramik (beispielsweise aus MCrAlY-Material) imprägniert wird und die Patentschrift EP-1270876 zeigt einen Einlaufbelag, der eine Anordnung von Metallfasern umfasst, wobei die Zwischenräumen mit einem Harz gefüllt sind. Allerdings ist die Herstellung derartiger Materialien bzw. Dichtungen oder Einlaufbeläge teilweise aufwändig und schwierig und auch das Eigenschaftsprofil hinsichtlich einer dichten Struktur mit ausreichend Festigkeit, aber gleichzeitig möglichst geringem Widerstand gegenüber einem anstreifenden Dichtungspartner soll in ausgewogener Weise erfüllt werden. Aus diesem Grunde besteht weiterhin Bedarf an verbesserten Einlaufbelägen für die Verwendung in Strömungsmaschinen, wie stationären Gasturbinen und Flugzeugtriebwerken.

### OFFENBARUNG DER ERFINDUNG

### AUFGABE DER ERFINDUNG

Es ist deshalb Aufgabe der vorliegenden Erfindung, einen Einlaufbelag für Strömungsmaschinen, insbesondere Flugzeugtriebwerke, zur Verfügung zu stellen, welcher ein ausgewogenes Eigenschaftsprofil hinsichtlich Dichtheit, Festigkeit und Reibwiderstand gegenüber einem Dichtungspartner aufweist und zudem möglichst einfach herstellbar sein soll.

### TECHNISCHE LÖSUNG

Diese Aufgabe wird gelöst durch einen Einlaufbelag mit den Merkmalen des Anspruchs 1 und eine Strömungsmaschine mit den Merkmalen des Anspruchs 10. Vorteilhafte Ausgestaltungen sind Gegenstand der abhängigen Ansprüche.

Die Erfindung schlägt vor, für einen Einlaufbelag statt des im Stand der Technik bekannten Metallgerüsts aus einem Metallschaum ein Metallgerüst bereitzustellen, welches nicht aus einem Schaum, sondern aus Metallfasern gebildet ist. Dadurch kann sowohl die Herstellung vereinfacht als auch die strukturelle Festigkeit des Einlaufbelags verbessert werden.

Das entsprechende Metallgerüst aus Metallfasern kann weiterhin einen anorganisch - nichtmetallischen Füllstoff aufweisen, um die Zwischenräume zwischen den Fasern zu füllen und dadurch die Dichtheit des Einlaufbelags zu gewährleisten.

Die Metallfasern können in Form eines Gewirks, eines Geflechts, eines Gewebes oder eines Filzes vorliegen. Hierbei wird unter Gewirk ein Fadensystem verstanden, bei dem die Metallfasern durch Maschenbildung miteinander verbunden sind, während beim Gewebe ein verkreuztes Fadensystem aus insbesondere rechtwinklig zueinander verkreuzten Metallfasern verstanden wird. Ein Metallfilz ist ein Flächengebilde aus ungeordneten, ineinander verkrallten Metallfasern. Unter Geflecht wird allgemein ein Produkt aus einem Ineinanderschlingen von mehreren Fäden verstanden, wobei die Fäden bzw. Fasern geordnet vorliegen.

Die Metallfasern können neben der formschlüssigen Verbindung in Form eines Gewirks, eines Geflechts, eines Gewebes oder eines Filzes zusätzlich stoffschlüssig miteinander verbunden sein, wobei die Metallfasern insbesondere miteinander versintert werden können, so dass beispielsweise bei einem Metallfaserfilz die Positionen der ineinander verschlungenen Metallfasern durch das Sintern fixiert sind.

Die Metallfasern können aus verschiedenen geeigneten Metallen oder Legierungen gebildet werden, wobei sich für den Einsatz in Flugzeugtriebwerken insbesondere Eisen - Chrom - Aluminium - Legierungen, insbesondere sogenannte Heizleiterlegierungen, bewährt haben. Diese bestehen mit entsprechend abnehmendem Gehalt in der Reihenfolge ihrer Aufzählung aus den Hauptbestandteilen Eisen, Chrom und Aluminium.

Die Füllstoffe zur Füllung der Zwischenräume zwischen den Metallfasern können aus polymerabgeleiteten Keramikschäumen oder selbstaushärtenden Zementen gebildet sein bzw. diese umfassen.

Die polymerabgeleiteten Keramikschäume beruhen auf siliziumhaltigen Polymeren, wie Polysilazanen, Polysiloxanen und Carbosilanen, die durch Pyrolyse zu Siliziumcarbonitriden oder Siliziumcarbooxynitriden umgewandelt werden.

Die selbstaushärtenden Zemente können durch Kalzium - Phosphatzement, insbesondere Magnesium - Kalzium - Phosphatzement, gebildet sein oder diesen umfassen. Unter selbstaushärtend wird hierbei verstanden, dass keine zusätzlichen Stoffe zum Starten des Aushärteprozesses beigefügt werden müssen und auch keine externen Anregungen, wie beispielsweise Wärmezufuhr oder Lichteinstrahlung, für die Aushärtung erforderlich sind.

### KURZBESCHREIBUNG DER FIGUREN

Die beigefügten Zeichnungen zeigen in rein schematischer Weise in
- Fig. 1: einen teilweisen Schnitt durch eine Strömungsmaschine mit einem Leit- und Laufschaufelpaar; und in
- Fig. 2: einen Schnitt durch einen erfindungsgemäßen Einlaufbelag.

Weitere Vorteile, Kennzeichen und Merkmale der vorliegenden Erfindung werden bei der nachfolgenden detaillierten Darstellung von Ausführungsbeispielen deutlich. Allerdings ist die Erfindung nicht auf diese Ausführungsbeispiele beschränkt.

### AUSFÜHRUNGSBEISPIELE

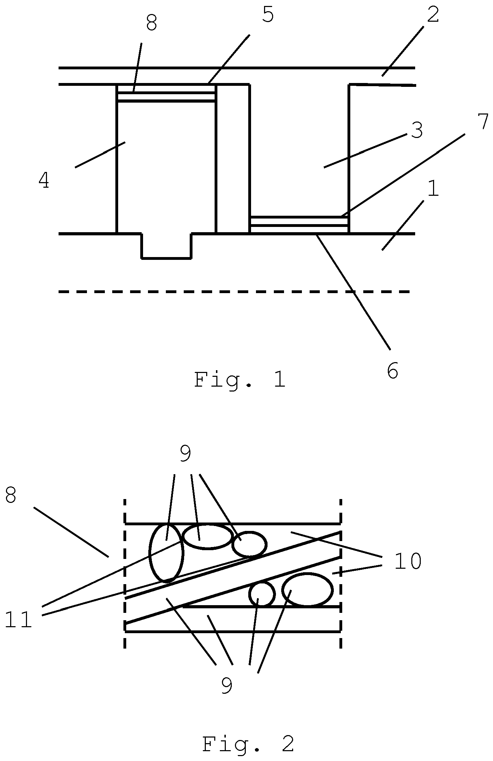

Die Fig. 1 zeigt einen teilweisen Schnitt durch eine Strömungsmaschine, wie beispielsweise ein Flugzeugtriebwerk, mit einer Welle 1, welche von einem Gehäuse 2 ringförmig umgeben ist, wobei jedoch in der Fig. 1 lediglich ein Teil oberhalb der gestrichelt dargestellten Symmetrielinie bzw. Drehachse gezeigt ist. An der Welle 1 sind eine Vielzahl von Laufschaufeln 4 umlaufend um die Welle 1 nebeneinander in einer Laufschaufelreihe sowie in mehreren Laufschaufelreihen angeordnet, wobei in der Fig. 1 lediglich eine Laufschaufelreihe mit einer Laufschaufel 4 gezeigt ist. Benachbart zu der Laufschaufel 4 ist eine Leitschaufel 3 angeordnet, die an dem Gehäuse 2 befestigt ist, wobei wiederum in mehreren Laufschaufelreihen jeweils mehrere Laufschaufeln umlaufend um die Drehachse nebeneinander angeordnet sind. Die Leitschaufeln 3 sind ortsfest mit dem Gehäuse 2 verbunden, während sich die Laufschaufeln 4 bei Drehung der Welle 1 mit dieser drehen.

Um Strömungsverluste zwischen Gehäuse 2 und den Spitzen der Laufschaufeln 4 einerseits sowie den freien Enden der Laufschaufeln 3 und der Welle 1 andererseits zu vermeiden, sind in diesen Bereichen sogenannte Dichtungen angeordnet, und zwar einerseits eine sogenannte Outer - Air - Seal im Bereich der Spitzen der Laufschaufeln 4 und eine Inner - Air - Seal im Bereich der freien Enden der Leitschaufeln 3.

Die Dichtungen bestehen jeweils aus aufeinander abgestimmter Dichtungspaare, beispielsweise einer Spitzenpanzerung 5 an den freien Enden der Laufschaufeln 4 mit einem sogenannten Einlaufbelag 8, welcher gegenüberliegend den freien Enden der Laufschaufeln 4 am Gehäuse 2 angeordnet ist.

Da sich der Spalt zwischen den freien Enden der Laufschaufeln 4 und dem Gehäuse 2 je nach Betriebsbedingungen ändern kann, wird die entsprechende Dichtung so ausgelegt, dass die Spitzenpanzerung 5 den Einlaufbelag 8 anschleift bzw. sich in diesen einschleift, um eine optimale Dichtung zu gewährleisten. Entsprechend können an der Spitzenpanzerung 5 sogenannte Dichtfinnen (nicht gezeigt) vorgesehen sein, die jeweils als hervorstehende Stege ausgebildet sind und definierte Nuten in den Einlaufbelag 8 einschleifen.

Entsprechend kann auch an der sogenannten Inner - Air - Seal eine Panzerung 6 mit einem Einlaufbelag 7 vorgesehen sein, wobei die Anordnung von Panzerung 6 und Einlaufbelag 7 an dem Rotor, d. h. der Welle 1, oder dem Stator, d. h. der Leitschaufel 3, beliebig erfolgen kann. Dies gilt auch für die Outer - Air - Seal - Dichtung.

Erfindungsgemäß wird der Einlaufbelag 7, 8 im vorliegenden Ausführungsbeispiel durch einen mit einem Keramikschaum gefüllten, gesinterten Metallfaserfilz gebildet, beispielsweise dem sog. Feltmetall FM 452 der Fa. Technetics, während der die Zwischenräume 10 zwischen den Fasern 9 ausfüllende Keramikschaum aus einem pyrolisierten Siloxan HTA 1500 Rapid Cure der Fa. KION gebildet ist. In der Schnittdarstellung der Fig. 2 sind verschiedene Metallfasern 9 dargestellt, die an Kontaktpunkten 11 stoffschlüssig miteinander verbunden sind, indem sie zusammengesintert sind. In den Zwischenräumen 10 zwischen den Metallfasern und teilweise entsprechend an der Oberfläche des Einlaufbelags 8 liegt ein Keramikschaum aus Siliziumcarbooxynitrid vor, der durch die Pyrolyse des Siloxan bei der Herstellung entstanden ist. Ein derartiger Einlaufbelag 8 weist den Vorteil auf, dass durch die geringe bzw. beseitigte Porosität eine geringe Permeabilität gegeben ist, so dass Arbeitsgas der Strömungsmaschine den Einlaufbelag 8 nicht durchdringen kann und somit Strömungsverluste vermieden werden. Darüber hinaus ist durch die Kombination von gesintertem Metallfaserfilz und Keramikschaum ein stabiler, mit ausreichender Festigkeit versehener Einlaufbelag gegeben, der jedoch gleichzeitig ein gutes Einschleifen des Dichtungspartners, beispielsweise in Form von Dichtfinnen, ermöglicht.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist, sondern dass vielmehr Abwandlungen in der Weise möglich sind, dass Einzelmerkmale weggelassen oder andersartige Kombinationen von Merkmalen verwirklicht werden können, solange der Schutzbereich der beigefügten Ansprüche nicht verlassen wird.

Darüber hinaus sind sämtliche Kombinationen der vorgestellten Einzelmerkmale Gegenstand der vorliegenden Offenbarung.

## Patentansprüche

1. Einlaufbelag für eine Strömungsmaschine, insbesondere ein Flugzeugtriebwerk, zur Anbringung an einer Dichtung zwischen einem Rotor und einem Stator, wobei der Einlaufbelag ein metallisches Gerüst umfasst, welches Zwischenräume aufweist, die mit einem anorganischen, nichtmetallischen Füllstoff gefüllt sind,
wobei das metallische Gerüst aus einer Anordnung von Metallfasern (9) gebildet ist
**dadurch gekennzeichnet,**
**dass** die Füllstoffe (10) aus polymerabgeleiteten Keramikschäumen oder selbstaushärtenden Zementen gebildet sind oder diese umfassen.

2. Einlaufbelag nach Anspruch 1,
**dadurch gekennzeichnet, dass**
die Metallfasern (9) in Form eines Gewirks, eines Geflechts, eines Gewebes oder eines Filzes vorliegen.

3. Einlaufbelag nach einem der vorhergehenden Ansprüche,
**dadurch gekennzeichnet, dass**
die Metallfasern (9) stoffschlüssig miteinander verbunden sind.

4. Einlaufbelag nach einem der vorhergehenden Ansprüche,
**dadurch gekennzeichnet, dass**
die Metallfasern (9) miteinander versintert sind.

5. Einlaufbelag nach einem der vorhergehenden Ansprüche,
**dadurch gekennzeichnet, dass**
die Metallfasern (9) aus einer FeCrAl - Legierung gebildet sind.

6. Einlaufbelag nach einem der vorhergehenden Ansprüche,
**dadurch gekennzeichnet, dass**
die polymerabgeleiteten Keramikschäume auf siliziumhaltigen Polymeren, insbesondere Polysilazanen, Polysiloxanen oder Carbosilanen beruhen.

7. Einlaufbelag nach Anspruch 6,
**dadurch gekennzeichnet, dass**
die polymerabgeleiteten Keramikschäume aus Siliziumcarbonitriden oder Siliziumcarbooxynitriden gebildet sind oder diese umfassen.

8. Einlaufbelag nach einem der vorhergehenden Ansprüche,
**dadurch gekennzeichnet, dass**
der selbstaushärtende Zement aus Calzium - Phosphatzement, insbesondere Magnesium - Calzium - Phosphatzement gebildet ist oder diese umfasst.

9. Strömungsmaschine, insbesondere Flugzeugtriebwerk, mit mindestens einem Rotor (1,4) und mindestens einem Stator (2,3), wobei sich der Rotor relativ zum Stator bewegt, und mit einer Dichtung (5,8;6,7) zwischen Rotor und Stator,
**dadurch gekennzeichnet, dass**
die Dichtung einen Einlaufbelag (7,8) nach einem der vorhergehenden Ansprüche umfasst.

## Claims

1. An abradable coating for a turbomachine, in particular a jet engine, for positioning on a sealing between a rotor and a stator, wherein the abradable coating comprises a metal framework, which has interstices, which are filled with an inorganic non-metallic inert material,
wherein the metal framework is formed by an arrangement of metal fibers (9),
**characterized in that**
the inert materials (10) are made of polymer-derived ceramic foams or self-hardening cements or comprise the same.

2. The abradable coating of claim 1,
**characterized in that**
the metal fibers (9) are provided as a knitted fabric, a braiding, a tissue or a felt.

3. The abradable coating of any of the preceding claims, **characterized in that**
the metal fibers (9) are connected to each other with a material fit.

4. The abradable coating of any of the preceding claims, **characterized in that**
the metal fibers (9) are sintered to each other.

5. The abradable coating of any of the preceding claims, **characterized in that**
the metal fibers (9) are composed of a FeCrAl alloy.

6. The abradable coating of any of the preceding claims, **characterized in that**
the polymer-derived ceramic foams are based on silicon-containing polymers, in particular polysilazanes, polysiloxanes or carbosilanes.

7. The abradable coating of claim 6,
**characterized in that**
the polymer-derived ceramic foams are composed of silicon-carbon-nitrides or silicon-carboxy-nitrides or comprise the same.

8. The abradable coating of any of the preceding claims, **characterized in that**
the self-hardening cement is composed of calcium-phosphate-cement, in particular magnesium-calcium-phosphate-cement or comprises the same.

9. A turbomachine, in particular a jet engine, having at least one rotor (1, 4) and at least one stator (2, 3), wherein the rotor moves relative to the stator, and a sealing (5, 8; 6, 7) between the rotor and the stator,
**characterized in that**
the sealing comprises an abradable coating (7, 8) according to any of the preceding claims.

## Revendications

1. Garniture d'entrée pour turbomachine, en particulier pour moteur d'avion, destinée à être fixée au niveau d'un joint placé entre un rotor et un stator, la garniture d'entrée comprenant une ossature métallique qui comporte des interstices qui sont remplis d'une charge minérale non métallique,
l'ossature métallique étant formée d'un agencement de fibres métalliques (9),
**caractérisée en ce que**
les charges (10) sont formées de mousses céramiques dérivées de polymères ou de ciments autodurcissants ou comportent ceux-ci.

2. Garniture d'entrée selon la revendication 1,
**caractérisée en ce que**
les fibres métalliques (9) se présentent sous la forme d'un tricot, d'une tresse, d'un tissu ou d'un feutre.

3. Garniture d'entrée selon l'une des revendications précédentes,
**caractérisée en ce que**
les fibres métalliques (9) sont reliées entre elles par liaison de matière.

4. Garniture d'entrée selon l'une des revendications précédentes,
**caractérisée en ce que**
les fibres métalliques (9) sont frittées les unes aux autres.

5. Garniture d'entrée selon l'une des revendications précédentes,
**caractérisée en ce que**
les fibres métalliques (9) sont formées à partir d'un alliage FeCrAl.

6. Garniture d'entrée selon l'une des revendications précédentes,
**caractérisée en ce que**
les mousses céramiques dérivées de polymères sont à base de polymères siliconés, en particulier de polysilazanes, polysiloxanes ou carbosilanes.

7. Garniture d'entrée selon la revendication 6,
**caractérisée en ce que**
les mousses céramiques dérivées de polymères sont constituées de carbonitrures de silicium ou des carboxyoxynitrures de silicium ou comprennent ceux-ci.

8. Garniture d'entrée selon l'une des revendications précédentes,
**caractérisée en ce que**
le ciment autodurcissant est formé de ciment à base de phosphate de calcium, en particulier de ciment à base de phosphate de calcium et de magnésium ou comprend celui-ci.

9. Turbomachine, notamment moteur d'aéronef, comprenant au moins un rotor (1, 4) et au moins un stator (2, 3), le rotor se déplaçant par rapport au stator, et un joint (5, 8, 6, 7) placé entre le rotor et stator,
**caractérisé en ce que**
le joint comprend une garniture d'entrée (7, 8) selon l'une des revendications précédentes.
